# EUROPÄISCHE PATENTSCHRIFT

(11) **EP 2 287 121 B1**
(45) Veröffentlichungstag und Bekanntmachung des Hinweises auf die Patenterteilung: **29.10.2014**
(21) Anmeldenummer: 10008322.9
(22) Anmeldetag: 10.08.2010
(51) Int. Cl.: C03C 3/091

(54) **Glas und Verwendung eines Glases für Glas-Metall-Verbindungen**
Glass and use of a glass for glass-metal compounds
Verre et utilisation d'un verre pour liaisons verre-métal

(30) Priorität: 21.08.2009 DE 102009038475
(43) Veröffentlichungstag der Anmeldung: 23.02.2011
(73) Patentinhaber: SCHOTT AG, 55122 Mainz (DE)
(72) Erfinder: Kass, Christof, 95643 Tirschenreuth (DE); Fechner, Jörg Hinrich, Dr., 92637 Weiden (DE)

(56) Entgegenhaltungen:
- EP-A1- 0 699 636
- EP-A1- 2 165 986
- GB-A- 2 010 241
- SU-A1- 726 040
- SU-A1- 726 041
- US-A1- 2005 181 925

## Beschreibung

Die Erfindung bezieht sich auf die Verwendung eines Glases für Glas-Metall-Verbindungen. Die Erfindung bezieht sich auch auf das Glas selbst.

Glas-Metall-Verbindungen werden beispielsweise bei Vakuum-Röhrenkollektoren eingesetzt. Bei den Vakuum-Röhrenkollektoren ist ein vakuumdichter Glasmetallverbund zur thermischen Isolation zwischen dem aus Metall bestehenden Absorberrohr und dem aus Glas bestehenden Hüllrohr erforderlich.

Solche Röhrenkollektoren werden beispielsweise in Parabolrinnen-Solarkraftwerken eingesetzt.

In Parabolrinnen-Solarkraftwerken werden durch die konzentrierte Strahlung in den Kollektoren Arbeitstemperaturen bis 400°C mit starken lokalen Temperaturunterschieden erzeugt. Hinzu treten die durch den Tagesrhythmus und zeitweilige Bewölkungsphasen bedingten ständigen Belastungen durch Temperaturwechsel.

Bei den Hochtemperatur-Solarkollektoren wurden bislang zum einen sogenannte nicht angepasste Glas-Metall-Verbindungen eingesetzt. Ihr Name rührt daher, dass Glas und Metall unterschiedliche thermische Ausdehnungskoeffizienten aufweisen. Zum anderen werden sogenannte angepasste Glas-Metall-Verbindungen eingesetzt, wobei eine Realisierungsmöglichkeit der Anpassung der Einsatz von mehreren Zwischengläsern ist. Dieser Weg weist aber verschiedene Nachteile auf.

Aus der DE 10 2004 008 559 A1 ist eine Glas-Metall-Verbindung eines Röhrenkollektors bekannt, bei der ein Aluminiumborosilikatglas verwendet wird, das auch als Material für Pharmaprimärpackmittel dient. Es ist nicht speziell an die Anforderungen eines Glases für Röhrenkollektoren und an die Anforderungen an die Herstellung eines solchen Glases angepasst. Ein ähnlicher Glaszusammensetzungsbereich eines Glases u. a. für die Solarthermie ist in der DE 10 2006 041 469 B3 beschrieben. Beide relativ boroxid- und aluminiumoxidreichen Gläser sind aus Kosten- und Umweltschutzgründen nachteilhaft. Aus DE 44 30 710 C1 sind borarme Borosilicatgläser bekannt, die einen thermischen Ausdehnungskoeffizienten α_{20/300} ≤ 5,3 x 10⁻⁶/K aufweisen.

Der Receiver als das Kernstück eines Röhrenkollektors für ein Parabolrinnen-Solarkraftwerk besteht aus einem inneren Rohr aus Stahl und einem äußeren Hüllrohr aus Glas. Beide Komponenten müssen über Glas-Metall-Verbindungen vakuumdicht verbunden werden. Typische Metalle der Glas-Metall-Verbindung sind Kovarlegierungen.

Das Hüllrohr benötigt einen an das Metall angepassten thermischen Ausdehnungskoeffizienten.

Das Stahlrohr (Absorberrohr) ist mit einem strahlungsselektiven Material beschichtet, um eine hohe Absorptionsrate zu gewährleisten.

Das Vakuum zwischen Hüllrohr und Absorberrohr reduziert den Wärmeverlust und liefert einen Beitrag zur optimalen Wärmeausbeute.

Das Glas, aus dem das Hüllrohr besteht, soll einen Brechungsindex aufweisen, der deutlich niedriger als der von Kalk-Natrion-Gläsern, also niedriger als 1,52, bevorzugt < 1,51 liegt. So wird der Anteil an reflektiertem Licht verringert.

Das Hüllrohr ist mit einer Antireflexschicht versehen, die zusammen mit der geforderten hohen Transmission des Glases zu einem hohen Transmissionsgrad von wenigstens 96 % führen soll.

Das Hüllrohr benötigt eine hohe Temperatur- und Temperaturwechselbeständigkeit, eine hohe Witterungsbeständigkeit, so eine hohe hydrolytische Beständigkeit, eine hohe mechanische Stabilität, so eine hohe Zugfestigkeit.

Es soll trotz seiner hohen, insbesondere thermischen Belastbarkeit gut und möglichst wenig energieintensiv schmelzbar sein. Außerdem sollen alle diese Glas- und Herstellungseigenschaften mit möglichst geringen Herstell- und Rohstoffkosten erzielbar sein.

Aufgabe der Erfindung ist es daher, ein Glas für eine angepasste Glas-Metall-Verbindung eines Röhrenkollektors zu finden, das die genannten Anforderungen erfüllt.

Diese Aufgabe wird durch ein Glas, das folgende Bestandteile in folgender Zusammensetzung enthält:

| | | |
|---|---|---|
| SiO₂ | 72 - 80 | Gew.-% |
| B₂O₃ | 4 - < 6 | Gew.-% |
| Al₂O₃ | 2 - 5 | Gew.-% |
| Na₂O | 4 - 7 | Gew.-% |
| K₂O | 0 - 3 | Gew.-% |
| CaO | 2,5 - 8 | Gew.-% |
| MgO | 0 - 2 | Gew.-% |
| BaO | 0 - 4 | Gew.-% |
| TiO₂ | 0 - 5 | Gew.-% |
| CeO₂ | 0 - 2 | Gew.-% |
| Fe₂O₃ | 0-0,1 | Gew.-% |
| F | 0 - 2 | Gew.-% |

und durch seine Verwendung für ein Glasrohr in einem Röhrenkollektor mit einer Glas-Metall-Verbindung gelöst.
Vorzugsweise beträgt der Al₂O₃-Gehalt weniger als 5 Gew.-%.

Ähnliche Gläser sind bereits aus DE 100 35 801 A1 für die Verwendung als Primärpackmittel bekannt, wie z.B. für Spritzen, Karpulen, Fläschchen und Reagenzgläser. Für die Herstellung solcher pharmazeutischer Primärpackmittel wird von Glasrohren mit einem maximalen Außendurchmesser von 30 mm ausgegangen. Auch sind ähnliche Gläser, die ebenfalls nur zu Rohren mit sehr geringen Durchmessern verarbeitet werden, nämlich zu Backlights, aus DE 10 2004 027 120 A1 und DE 10 2004 027 119 A1 bekannt.

Die Verwendung solcher Gläser zur Herstellung von Glasrohren für die Solarthermie, die einen Durchmesser von mehr als 120 mm aufweisen müssen und für die Verwendung in Glas-Metall-Verbindungen wurde bisher nicht in Betracht gezogen. Dies ist darauf zurückzuführen, dass bisher nicht erkannt wurde, dass diese Gläser Eigenschaften vereinen, die für die Verwendung in Vakuumröhrenkollektoren besser als die bisher verwendeten Gläser geeignet sind.

Innerhalb des geschilderten Zusammensetzungsbereiches wird zur Einstellung der für die Verschmelzung mit den gängigen bzw. genannten Metallen/Metalllegierungen geforderten Glaseigenschaften, was neben dem genannten thermischen Ausdehnungskoeffizienten auch eine angepasste Transformationstemperatur Tg ist, in der Glaszusammensetzung folgender Quotient eingehalten (alle Angaben jeweils in mol-%): (Al₂O₃ + B₂O₃)/(MgO + CaO + BaO) < 5, bevorzugt < 3, besonders bevorzugt < 2. Bevorzugt ist für dieses Verhältnis, das für ein besonders ausgewogenes Vorliegen der genannten Komponenten sorgt, ein Wert von > 0,5.

Die erfindungsgemäßen Gläser besitzen einen für ihre erfindungsgemäße Verwendung wesentlichen thermischen Ausdehnungskoeffizienten von > 5,3 x 10⁻⁶/K bis 5,8 x 10⁻⁶/K, bevorzugt > 5,3 x 10⁻⁶/K bis 5,7 x 10⁻⁶/K, was nur geringfügig von den thermischen Ausdehnungskoeffizienten gängiger Metalle abweicht. Diese vorteilhafte. Eigenschaft macht die Verwendung von Übergangsgläsern überflüssig, so dass ein industriell automatisierbarer Herstellungsprozess möglich ist. Die Gläser sind ferner säure- und laugenbeständig (Klasse S1 oder S2 und A2 nach DIN 12116 und DIN ISO 695) sowie wasserbeständig (Klasse HGB 1 oder 2, DIN ISO 719). Außerdem lassen sich diese Gläser auch problemlos zu Rohren mit Außendurchmessern > 120 mm verarbeiten. Ferner können sie Eisenoxid enthalten. Vorzugsweise besitzen sie einen geringen Eisenoxidgehalt, was auf Grund der Transmissionsanforderungen für Hüllrohre in Vakuumröhrenkollektoren besonders wichtig ist. Den geringen Eisengehalt weiß der Fachmann durch die Auswahl geeigneter eisenarmer Rohstoffe zu erzielen. Bevorzugt besitzen sie einen Gehalt an Eisenoxiden (angegeben in Fe₂O₃) von 50 ppm bis 200 ppm, besonders bevorzugt von 100 ppm bis 150 ppm. In einer besonders bevorzugten Ausführungsform wird das Glas unter eher reduzierenden Bedingungen erschmolzen (z.B. durch Einstellung des Sauerstoff-Gas- bzw. -Öl-Verhältnisses bzw. durch den Zusatz von reduzierend wirkenden Stoffen wie z.B. Zucker oder Kohle in das Gemenge bzw. die Glasschmelze), um das Gleichgewicht Fe²⁺/Fe³⁺ in Richtung Fe²⁺-Seite zu verschieben, um eine möglichst hohe Transmission im nahen IR-Bereich bis 2000 nm zu erreichen. Verbunden hiermit ist eine höhere Absorption im UV-Bereich, welche einen UV-Schutz z.B. für die Absorberschicht darstellen kann.

Weiter enthält das Glas bevorzugt nur einen geringen Gehalt an H₂O, da dies auch im IR absorbiert und somit zu einer Verringerung der Absorption des Absorberrohres und somit zu einer Verringerung des Wirkungsgrades des Receiverrohres kommt und zu einem zusätzlichen Aufheizen des Glasrohres führen kann. Ein geringer Wassergehalt kann durch Verwendung von wasserarmen Rohstoffen sowie durch Schmelzen in besonderen Wannentypen (z.B. vollelektrische Wannenkonzepte o.ä.) erreicht werden.

Bevorzugt ist ein Glas und seine Verwendung, das mehr als 3 Gew.-% von der Summe aus CaO, MgO, BaO SrO, ZnO enthält. Wenn das Glas, wie bevorzugt, frei von ZnO und SrO ist, ist vorzugsweise der Anteil an CaO + MgO + BaO > 3 Gew.-%. Wenn das Glas, wie besonders bevorzugt, zusätzlich BaO-frei ist, beträgt vorzugsweise der Anteil an CaO + MgO > 3 Gew.-%.

Bevorzugt ist ein Glas und seine Verwendung, das folgende Bestandteile in folgender Zusammensetzung enthält:

| | | |
|---|---|---|
| SiO₂ | 75 - 80 | Gew.-% |
| B₂O₃ | 4,5 - < 6 | Gew.-% |
| Al₂O₃ | 2 - 4,5 | Gew.-% |
| Na₂O | 5,5 - 7 | Gew.-% |
| K₂O | 0 - 2 | Gew.-% |
| CaO | > 2,5 - 8 | Gew.-% |
| MgO | 0 - 2 | Gew.-% |
| TiO₂ | 0 - 5 | Gew.-% |
| CeO₂ | 0 - 2 | Gew.-% |
| Fe₂O₃ | 0 - 0,1 | Gew.-% |
| F | 0 - 2 | Gew.-% |

Besonders bevorzugt ist ein K₂O-Gehalt < 2 Gew.-%, ganz besonders bevorzugt von ≤ 1,5 Gew.-%. Auch dadurch werden die Rohstoffkosten reduziert.

Besonders bevorzugt ist ein CaO-Gehalt von wenigstens 3,5 Gew.-%. Besonders bevorzugt ist ein SiO₂-Gehalt von wenigstens 76 Gew.-%.

Das Glas kann mit üblichen Läutermitteln wie Sb₂O₃, As₂O₃, NaCl, BaCl, CaCl, MgCl, SnO₂, V₂O₅, Na₂SO₄, BaSO₄ und anderen Alkali- bzw. Erdalkalisulfaten in üblichen Mengen, also beispielsweise mit Zusätzen bis 0,5 Gew.-% geläutert werden. Vorzugsweise wird auf V₂O₅ verzichtet. Soll das Glas BaO-frei sein, wird auf BaCl und BaSO₄ verzichtet. Soll das Glas MgO-frei sein, wird auf MgCl verzichtet.

Bevorzugt enthält das verwendete Glas 0,02 - 0,5 Gew.-% Fluorid. Der Fachmann weiß den Gehalt an in der Schmelze leicht flüchtigen Fluoriden im Gemenge so auszuwählen, dass der genannte Anteil im fertigen Glas vorhanden ist.

Auch CeO₂ hat Läuterwirkung.

Das Glas kann bis zu 5 Gew.-% TiO₂ enthalten. Vorzugsweise ist es jedoch TiO₂-frei. Geringe Mengen an TiO₂ können jedoch beispielsweise über den Rohstoff Tonerde ins Glas hineinkommen.

Das Glas kann zur Variation des Ausdehnungskoeffizienten α_{20/300} noch weitere Komponenten wie Li₂O und/oder ZnO und/oder ZrO₂ in Mengen von maximal 1,5 % enthalten, die die für die Verwendung geforderten Eigenschaften nicht nachteilig beeinflussen.

Bevorzugt besteht das Glas bis auf Verunreinigungen, z. B. an V₂O₅, aus den Komponenten SiO₂, B₂O₃, Al₂O₃, Na₂O, CaO, ggf. K₂O, MgO, BaO, CeO₂, F, Fe₂O₃ und/oder TiO₂ in den genannten Mengen.

Eine bevorzugte Verwendung sieht vor, dass das Metall /die Metalllegierung der Glas-Metall-Verbindungen eine Kovarlegierung, nämlich ein Metallwerkstoff der Gruppe Nr. 1.3981 der DIN 17745 ist. Dieser Werkstoff besitzt folgende Zusammensetzung (Massenanteile in %):
28 - 30 Ni, bis 0,05 C, 16 - 18 Co, Rest Fe.

### Beispiele:

Es wurden sechs Beispiele erfindungsgemäßer Gläser (A1 - A6) und ein Glas als Vergleichsbeispiel (V1) aus üblichen Rohstoffen geschmolzen.

Die Tabellen 1 und 3 zeigen für diese Ausführungsbeispiele A1 - A6 und das Vergleichsglas V1 die Zusammensetzungen in Gew.-% (Tabelle 1) sowie in mol-% zusammen mit dem Summenverhältnis (Al₂O₃ + B₂O₃)/(MgO + CaO + BaO) (Tabelle 3). Tabelle 2 zeigt für die Ausführungsbeispiele und das Vergleichsbeispiel folgende wichtige Eigenschaften:
- den thermischen Ausdehnungskoeffizienten α_{20/300} [10⁻⁶/K]
- die Transformationstemperatur T_{g} [°C]
- die Verarbeitungstemperatur V_{A} [°C]
- die Temperatur, bei der das Glas geschmolzen wurde, hier "Schmelztemperatur" [°C] genannt
- den relativen Gemengepreis, normiert gegenüber V1
- die solare Transmission im Wellenlängenintervall 300 - 1300 nm [%]
- den Brechungsindex n_{d}

**Tabelle 1**

| Zusammensetzungen (in Gew.-% auf Oxidbasis) von erfindungsgemäßen Gläsern (A) und Vergleichsglas (V) | | | | | | | |
|---|---|---|---|---|---|---|---|
| | V1 | A1 | A2 | A3 | A4 | A5 | A6 |
| SiO₂ | 74,0 | 77,6 | 78,0 | 78,0 | 79,3 | 75,3 | 76,8 |
| B₂O₃ | 9,4 | 5,5 | 5,5 | 5,0 | 4,5 | 5,5 | 5,8 |
| Al₂O₃ | 6,5 | 2,1 | 3,3 | 2,9 | 2,2 | 4,3 | 4,3 |
| Na₂O | 6,6 | 6,7 | 6,4 | 6,0 | 6,1 | 6,6 | 6,8 |
| K₂O | 2,6 | - | 1,5 | 1,5 | 1,5 | - | 1,4 |
| MgO | - | 0,8 | 1,0 | 1,0 | 0,9 | 1,3 | 0,8 |
| CaO | 0,7 | 7,2 | 4,4 | 5,6 | 5,6 | 7,0 | 2,6 |
| BaO | - | - | - | - | - | - | 1,5 |

Sämtliche Gläser der Tabelle enthalten ca. 120ppm Fe₂O₃. Außerdem enthalten sie NaCl als Läutermittel.

**Tabelle 2**

| Ausgewählte Eigenschaften von erfindungsgemäßen Gläsern (A) und Vergleichsglas (V) | | | | | | | |
|---|---|---|---|---|---|---|---|
| | V1 | A1 | A2 | A3 | A4 | A5 | A6 |
| α_{20/300} [10⁻⁶ / K] | 5,5 | 5,51 | 5,5 | 5,53 | 5,5 | 5,52 | 5,60 |
| T_{g} [°C] | 565 | 565 | 563 | 565 | 563 | 570 | 570 |
| V_{A} [°C] | 1175 | 1175 | 1206 | 1206 | 1206 | 1206 | 1220 |
| "Schmelztemp." [°C] | 1500 | 1450 | n.b. | 1480 | n.b. | 1460 | n.b. |
| Gemengepreis | 1 | n.b. | 0,6 | n.b. | n.b. | 0,7 | n.b. |
| Solare Transmission (300-1300 nm) [%] | <91 % | <91 % | <91 % | <91 % | <91 % | <91 % | <91 % |
| n_{d} | 1,490 | 1,505 | 1,50 | n.b. | 1,50 | 1,50 | n.b. |

| | | | | | | | |
|---|---|---|---|---|---|---|---|
| n.b. = nicht bestimmt | | | | | | | |

**Tabelle 3**

| Zusammensetzungen (in mol-% auf Oxidbasis) von erfindungsgemäßen Gläsern (A) und einem Vergleichsglas (V) sowie Summe und Verhältnis (Al₂O₃ + B₂O₃) / (MgO + CaO + BaO) | | | | | | | |
|---|---|---|---|---|---|---|---|
| | V1 | A1 | A2 | A3 | A4 | A5 | A6 |
| SiO₂ | 78,1 | 78,4 | 79,6 | 79,4 | 80,3 | 76,5 | 79,7 |
| B₂O₃ | 8,6 | 4,8 | 4,8 | 4,4 | 3,9 | 4,8 | 5,2 |
| Al₂O₃ | 4,0 | 1,3 | 2,0 | 1,7 | 1,3 | 2,6 | 2,6 |
| Na₂O | 6,8 | 6,6 | 6,3 | 5,9 | 6,0 | 6,5 | 6,8 |
| K₂O | 1,8 | - | 1,0 | 1,0 | 1,0 | - | 0,9 |
| MgO | 0,0 | 1,2 | 1,5 | 1,5 | 1,4 | 2,0 | 1,3 |
| CaO | 0,8 | 7,8 | 4,8 | 6,1 | 6,1 | 7,6 | 2,9 |
| BaO | - | - | - | - | - | - | 0,6 |
| (Al₂O₃ + B₂O₃) / (MgO + CaO + BaO) | 15,9 | 0,7 | 1,1 | 0,8 | 0,7 | 0,8 | 1,9 |

Das Vergleichsbeispiel V1 erfüllt zwar die meisten für die gewünschte Verwendung relevanten Eigenschaften, muss aber bei einer nachteilig hohen Schmelztemperatur erschmolzen werden und besitzt um ca. 1/3 höhere Gemengekosten.

Wie die Ausführungsbeispiele verdeutlichen, besitzen die erfindungsgemäßen Gläser nicht nur folgende insbesondere für ihre erfindungsgemäße Verwendung vorteilhafte Eigenschaften, sondern auch folgende für eine wirtschaftliche Herstellung wesentliche Eigenschaften:
- Sie weisen einen thermische Dehnung α_{20/300} von > 5,3 x 10⁻⁶/K bis 5,8 x 10⁻⁶/K, in bevorzugten Ausführungsformen von > 5,3 x 10⁻⁶/K bis 5,7 x 10⁻⁶/K auf und sind damit angepasst an das Ausdehnungsverhalten von in Glas-Metall-Verbindungen für Röhrenkollektoren verwendeten Metallen und/oder Metalllegierungen, insbesondere Kovarlegierungen.
- Sie weisen eine Transformationstemperatur von maximal 585 °C, in bevorzugten Ausführungsformen von maximal 575 °C auf. Mit diesen Transformationstemperaturen können die aus diesen Gläsern bestehenden Kollektor- bzw. Receiverrohre problemlos verarbeitet werden. Höhere Transformationstemperaturen würden einen höheren Energieverbrauch bei der Receiverfertigung bedeuten und würden zu zu hohen Spannungen in der Glas-Metall-Verschmelzung führen. Die Temperaturbeständigkeit der Gläser ist mit diesen Transformationstemperaturen für die Verwendung als Hüllrohr ausreichend hoch. Auch ihre Temperaturwechselbeständigkeit ist ausreichend hoch.
- Sie weisen eine Verarbeitungstemperatur V_{A} von maximal 1230 °C, in bevorzugten Ausführungsformen von maximal 1220 °C auf. Mit diesen Verarbeitungstemperaturen können die aus diesen Gläsern bestehenden Kollektor- bzw. Receiverrohre problemlos verarbeitet werden. Höhere Verarbeitungstemperaturen würden einen höheren Energieverbrauch bei der Glasschmelze und Receiverfertigung bedeuten.
- Die Gläser besitzen eine hohe Witterungsbeständigkeit, so eine sehr hohe hydrolytische Beständigkeit, was für die Verarbeitung der Gläser und den Einsatz als Rohre von Vorteil ist.
- Sie besitzen eine hohe mechanische Stabilität, so eine hohe Zugfestigkeit, was für Verarbeitung und Einsatz der Rohre von Bedeutung ist.
- Die Gläser besitzen Brechungsindices von < 1,52, bevorzugt <1,51, ganz besonders bevorzugt < 1,50.
- Die Gläser weisen die gewünscht hohe solare Transmission auf.
- Ihr Gemengepreis ist relativ niedrig. Er kann um bis zu ca. 30 % niedriger als der von für die erfindungsgemäße Verwendung bekannten Gläser.
- Die erfindungsgemäßen Gläser lassen sich gegenüber für die erfindungsgemäße Verwendung bekannten Gläsern bei deutlich erniedrigten Temperaturen, nämlich < 1500 °C, bevorzugt ≤ 1480 °C, schmelzen. Dadurch ist der Energieverbrauch um ca. 10 % erniedrigt. Außerdem wird die Nettoleistung des Schmelzaggregats erhöht. Die Gläser sind in hohen Ausbeuten schmelzbar, sie zeigen kaum Schmelzrelikte durch nicht aufgeschmolzenes Gemenge und besitzen eine gute Läuterbarkeit.
- Der niedrige B₂O₃-Gehalt der Gläser ist aus Kosten- und Umweltschutzgründen ein Vorteil.
- Die Gläser weisen eine überraschend hohe Kristallisationsstabilität auf. Damit sind sie sowohl im Danner- als auch im A-Zug- bzw. Vello-Rohrziehverfahren gut prozessierbar. Sie können aber, in Abhängigkeit von der gewünschten Verwendung, auch als Flachgläser, beispielsweise nach Float- und Walzverfahren hergestellt werden.

Mit diesen Eigenschaften sind die Gläser gut und kostengünstig herstellbar. Insbesondere ist ihr geringer B₂O₃-Gehalt für eine kostengünstige und umweltfreundliche Herstellung vorteilhaft. Sie lassen sich gut zu Rohren, auch mit größeren Durchmessern, verarbeiten. Diese sind hervorragend geeignet für die Verwendung als Glasrohr in einem Röhrenkollektor mit einer Glas-Metall-Verbindung.

Die Gläser sind ebenfalls hervorragend geeignet für die Verwendung als Deck-, Substrat- oder Superstratgläser in photovoltaischen Produkten.

## Patentansprüche

1. Verwendung eines Glases, enthaltend folgende Bestandteile:
| | | |
|---|---|---|
| SiO₂ | 72 - 80 | Gew.-% |
| B₂O₃ | 4 - < 6 | Gew.-% |
| Al₂O₃ | 2 - 5 | Gew.-% |
| Na₂O | 4 - 7 | Gew.-% |
| K₂O | 0 - 3 | Gew.-% |
| CaO | 2,5 - 8 | Gew.-% |
| MgO | 0 - 2 | Gew.-% |
| BaO | 0 - 4 | Gew.-% |
| TiO₂ | 0 - 5 | Gew.-% |
| CeO₂ | 0 - 2 | Gew.-% |
| Fe₂O₃ | 0 - 0,1 | Gew.-% |
| F | 0 - 2 | Gew.-%, |
wobei im Glas das Verhältnis der Summe aus Al₂O₃ und B₂O₃ (in mol-%) zu der Summe aus MgO, CaO und BaO (in mol-%) < 5 beträgt und der thermische Ausdehnungskoeffizient des Glases α_{20/300} > 5,3 · 10⁻⁶/K bis 5,8 · 10-6/K beträgt, für ein Glasrohr in einem Röhrenkollektor mit einer Glas-Metall-Verbindung.

2. Verwendung nach Anspruch 1, wobei die Summe aus CaO, MgO, BaO, SrO, ZnO > 3 Gew.-% beträgt

3. Verwendung nach Anspruch 1 oder 2, wobei das Glas folgende Bestandteile enthält:
| | | |
|---|---|---|
| SiO₂ | 75 - 80 | Gew.-% |
| B₂O₃ | 4,5 - < 6 | Gew.-% |
| Al₂O₃ | 2 - 4,5 | Gew.-% |
| Na₂O | 5,5 - 7 | Gew.-% |
| K₂O | 0 - 2 | Gew.-% |
| CaO | > 2,5 - 8 | Gew.-% |
| MgO | 0 - 2 | Gew.-% |
| TiO₂ | 0 - 5 | Gew.-% |
| CeO₂ | 0 - 2 | Gew.-% |
| Fe₂O₃ | 0 - 0,1 | Gew.-% |
| F | 0 - 2 | Gew.-% |

4. Verwendung nach einem der Ansprüche 1 bis 3,
wobei das Glas 50 - 200 ppm Fe₂O₃, bevorzugt 100 - 150 ppm Fe₂O₃ enthält.

5. Verwendung nach einem der Ansprüche 1 bis 4, wobei das Glas bis auf Verunreinigungen aus den genannten Bestandteilen besteht.

6. Verwendung nach einem der Ansprüche 1 bis 5, wobei das Metall/die Metalliegierung der Glas-Metall-Verbindung eine Kovarlegierung ist.

## Claims

1. Use of a glass containing the following constituents:
| | | |
|---|---|---|
| SiO₂ | 72 - 80 | wt% |
| B₂O₃ | 4 - < 6 | wt% |
| Al₂O₃ | 2 - 5 | wt% |
| Na₂O | 4 - 7 | wt% |
| K₂O | 0 - 3 | wt% |
| CaO | 2.5 - 8 | wt% |
| MgO | 0 - 2 | wt% |
| BaO | 0 - 4 | wt% |
| TiO₂ | 0 - 5 | wt% |
| CeO₂ | 0 - 2 | wt% |
| Fe₂O₃ | 0 - 0.1 | wt% |
| F | 0 - 2 | wt% |
the ratio of the sum of Al₂O₃ and B₂O₃ (in mol%) to the sum of MgO, CaO and BaO (in mol%) in the glass being < 5 and the coefficient of thermal expansion of the glass α_{20/300} being > 5.3·10⁻⁶/K to 5.8·10⁻⁶/K, for a glass tube in a tube collector comprising a glass-metal bond.

2. Use according to Claim 1, wherein the sum of CaO, MgO, BaO, SrO, ZnO is > 3 wt%.

3. Use according to Claim 1 or 2, wherein the glass contains the following constituents:
| | | |
|---|---|---|
| SiO₂ | 75 - 80 | wt% |
| B₂O₃ | 4.5 - < 6 | wt% |
| Al₂O₃ | 2 - 4.5 | wt% |
| Na₂O | 5.5 - 7 | wt% |
| K₂O | 0 - 2 | wt% |
| CaO | > 2.5 - 8 | wt% |
| MgO | 0 - 2 | wt% |
| TiO₂ | 0 - 5 | wt% |
| CeO₂ | 0 - 2 | wt% |
| Fe₂O₃ | 0 - 0.1 | wt% |
| F | 0 - 2 | wt% |

4. Use according to one of Claims 1 to 3, wherein the glass contains 50 - 200 ppm Fe₂O₃, preferably 100 - 150 ppm Fe₂O₃.

5. Use according to one of Claims 1 to 4, wherein except for impurities, the glass consists of the said constituents.

6. Use according to one of Claims 1 to 5, wherein the metal/metal alloy of the glass-metal bond is a Kovar alloy.

## Revendications

1. Utilisation d'un verre, contenant les constituants suivants :
| | | |
|---|---|---|
| SiO₂ | 72 à 80 | % en poids |
| B₂O₃ | 4 à < 6 | % en poids |
| Al₂O₃ | 2 à 5 | % en poids |
| Na₂O | 4 à 7 | % en poids |
| K₂O | 0 à 3 | % en poids |
| CaO | 2,5 à 8 | % en poids |
| MgO | 0 à 2 | % en poids |
| BaO | 0 à 4 | % en poids |
| TiO₂ | 0 à 5 | % en poids |
| CeO₂ | 0 à 2 | % en poids |
| Fe₂O₃ | 0 à 0,1 | % en poids |
| F | 0 à 2 | % en poids, |
dans laquelle le rapport entre la somme d'Al₂O₃ et de B₂O₃ (en % en moles) et la somme de MgO, CaO et BaO (en % en moles) dans le verre est < 5 et le coefficient d'expansion thermique du verre α_{20/300} est de > 5,3·10⁻⁶/K à 5,8·10⁻⁶/K, pour un tube de verre dans un collecteur tubulaire comprenant une liaison verre-métal.

2. Utilisation selon la revendication 1, dans laquelle la somme de CaO, MgO, BaO, SrO, ZnO est > 3 % en poids.

3. Utilisation selon la revendication 1 ou 2, dans laquelle le verre contient les constituants suivants :
| | | |
|---|---|---|
| SiO₂ | 75 à 80 | % en poids |
| B₂O₃ | 4 , 5 à < 6 | % en poids |
| Al₂O₃ | 2 à 4,5 | % en poids |
| Na₂O | 5,5 à 7 | % en poids |
| K₂O | 0 à 2 | % en poids |
| CaO | > 2,5 à 8 | % en poids |
| MgO | 0 à 2 | % en poids |
| TiO₂ | 0 à 5 | % en poids |
| CeO₂ | 0 à 2 | % en poids |
| Fe₂O₃ | 0 à 0,1 | % en poids |
| F | 0 à 2 | % en poids. |

4. Utilisation selon l'une quelconque des revendications 1 à 3, dans laquelle le verre contient 50 à 200 ppm de Fe₂O₃, de préférence 100 à 150 ppm de Fe₂O₃.

5. Utilisation selon l'une quelconque des revendications 1 à 4, dans laquelle le verre est constitué des constituants mentionnés à l'exception des impuretés.

6. Utilisation selon l'une quelconque des revendications 1 à 5, dans laquelle le métal/l'alliage métallique de la liaison verre-métal est un alliage Kovar.
